# EUROPEAN PATENT APPLICATION

(11) **EP 1 494 185 A1**
(43) Date of publication of application: **05.01.2005**
(21) Application number: 04076916.8
(22) Date of filing: 05.07.2004
(51) Int. Cl.: G07F 17/32, G07F 19/00, G07C 15/00

(54) **Method and system for conducting a game of chance**

(30) Priority: 03.07.2003 NL 1023804
(71) Applicant: Stichting Exploitatie Nederlandse Staatsloterij, 2514 JA Den Haag (NL)
(72) Inventor: Poot, Edwin Richard, 4901 GJ Oosterhout (NL); Groenewegen, Dimitri Onno, 3523 TX Utrecht (NL)
(74) Representative: Jilderda, Anne Ayolt

(57) **Abstract**

In a method and system for conducting a game of chance, in particular a lottery, use is made of at least one telecommunication network (PSTN, GSM-1, GSM-2), wherein a telecommunication device (MP) of a player is given access to a telecommunication home network (GSM-1). The player sends a participation message to a lottery platform (LP) using the telecommunication device (MP) in order to sign up for at least one draw of the lottery. The desired participation in the at least one draw is charged to the player by means of a payment system. An identity of the telecommunication home network (GSM-1) of the player is determined from the participation message. On the basis thereof the at least one draw is charged to the player and participation in the at least one draw is only allowed after payment therefor has been established by the platform.

## Description

The present invention relates to a method for conducting a game of chance, using at least one telecommunication network, wherein a telecommunication device of a player is given access to a telecommunication home network, wherein the player sends a participation message to an electronic game platform using the telecommunication device in order to sign up for at least one execution of the game of chance and wherein participation in the at least one execution is charged to the player by means of a payment system.

The home network is here the network or part of the network wherein the telecommunication device is primarily connected for receiving telecommunication services and by means of which costs for establishing and maintaining telecommunication services are charged to a holder of the telecommunication device. Within the scope of the invention the term home network herein comprises an optionally separate sub-network in the form of an optionally dynamically allocated part of a physical network which is specifically assigned to a provider of the home network for operation by this provider.

In addition, the invention relates to a system for conducting a game of chance, in particular a lottery, comprising at least one telecommunication network, a telecommunication device of a player which has been given access to a telecommunication home network, a game of chance platform which is able and adapted to receive a sign-up for at least one execution of the game of chance from the telecommunication device and to make a prize award on the basis of the at least one execution, and comprising a payment system for charging the player for participation in the at least one execution.

Lotteries are one of the oldest forms of games of chance and probably here to stay. Up until recently there were periodical draws at intervals of weeks, months or even a year, for which physical tickets were physically purchased but, since the emergence of modem forms of telecommunication and the Internet and the demand for a 24-hour economy, wholly virtual lotteries are also taking place. An example hereof is described in Netherlands patent number NL1017133. This relates to a method and a system for conducting a lottery, wherein using telecommunication equipment a participation message is sent to a participation regulating device which is permanently open for this purpose. The would-be participant has received beforehand a lot code and participates with this lot code for a prize in the lottery for which he/she thus registers. The costs associated with participation are charged to the player by means of a payment system provided for this purpose in the network. No physical lots therefore have to be issued, payment of a prize amount that has been won can also take place fully autonomously and it is possible to sign up 24 hours a day, seven days a week for a subsequent draw.

An advantage of such a method is the associated low threshold and simple and permanent accessibility which will increase the inclination to participate. However, this same low threshold and simplicity also involves the danger that, partly due to the relative anonymity and the often short time between sending of the participation message and the subsequent draw, it is not possible to guarantee that payment for the lottery also actually takes place. Although the payment system will charge participation to the participant, there is however no guarantee at the moment of participation in the lottery that the payment system will actually be successful in doing so. Not only does this result in loss of turnover for the lottery, but the chances of other participants winning is hereby adversely affected in unfair manner, and the lottery cannot therefore comply with authorization requirements set in such cases by a government.

The present invention has for its object, among others, to provide a method for conducting a game of chance, in particular a lottery, of the type stated in the preamble, in which the above stated drawbacks are obviated.

To this end a method of the type stated in the preamble has the feature according to the invention that an identity of the telecommunication home network of the player is determined from the participation message, that on the basis of the identity of the home network of the player a payment protocol is followed to obtain payment for the at least one execution via a network payment system of the home network of the player, and that participation in the at least one execution is only allowed after irrevocable payment therefor has been established. By thus first determining the identity of the telecommunication home network, an appropriate protocol can be followed by the payment system in order to ensure payment. In the method according to the invention a payment verification is thus provided prior to execution of the game of chance in which there is participation, so that unpaid participation can be avoided. A particular form of the method according to the invention has the feature here that the game of chance comprises a lottery. It is of great importance in such cases, particularly in a lottery, to make sure of payment prior to participation.

A particular embodiment of the method has the feature according to the invention that the participation message is a text message, and more particularly that the text message is sent making use of a text message service (SMS) of the telecommunication network. By making use of text messages, in particular SMS messages, for sign-up, the content thereof can be analysed and processed with a high degree of precision and in fully automated manner. No manpower is thus required for the sign-up procedure.

In a preferred embodiment the method according to the invention has the feature that the payment system comprises a telecommunication network payment system which is associated with the home network of the player and which charges the player for a use of the telecommunication device in a telecommunication network. This provides a seamless connection to the payment system already available in the home network of the player. A confirmation from this network payment system that payment for the desired participation in the relevant game of chance has been made can be interpreted as irrevocable payment for participation. A possible later collection from the actual player is left to the network payment system of the home network of the player.

Such a telecommunication network payment system can take different forms. In a further particular embodiment, the method according to the invention is however characterized in that the telecommunication network payment system comprises a payment system from a group comprising a current account at the provider of the home network and a prior money deposit to which the payment can be debited. Such a current account is generally an account which is often linked to a determined preselected form of subscription to which payments associated with establishing and maintaining telecommunication connections by the telecommunication device as well as other telecommunication services of which use has been made via the telecommunication device are charged and periodically collected.

The money deposit can be a so-called prepaid SIM card which can be purchased for a money equivalent value and topped up as required and which provides the telecommunication device with access to the home network, wherein the above stated costs and payments can be debited to a balance recorded on the card.

Use can also be made for payment purposes of a prior money deposit to an existing (bank) account which is directly accessible for debiting by the game platform, particularly a virtual account designated as "virtual wallet" which is only accessible on the Internet or a similar network. Whatever payment system is chosen, participation in the lottery, according to the invention, will only be allowed once the payment due therefor has been authorized by the relevant payment system.

In a further preferred embodiment, the method according to the invention is characterized in that, in response to the participation message, the payment system sends at least one participation confirmation message to which a participation payment is linked which is charged in the home network to the telecommunication device of the player. Use is made more particularly here for the return message of a text message in accordance with a text message service such as is available in the telecommunication network. The telecommunication network payment system then provides the necessary infrastructure for charging the costs associated therewith to the recipient of the message in a manner which is usual within the home network. A payment for participation in the at least one execution can thus be charged to the player in the return message.

In a further preferred embodiment, the method according to the invention has the feature that the payment system generates at least two messages to the telecommunication device, wherein to a first of the two messages is linked the participation payment and to a second of the two messages is linked a payment for use of the at least one telecommunication network, both of which payments are charged in the home network to the telecommunication device of the player. By thus making use of a number of return messages, different types of cost and payment can be charged via different messages. Not only does this provide an advantage in identifying and monitoring different money flows more clearly, it also provides the option of including different government taxes and other government charges in different return messages and thus of charging these separately, optionally in other manner.

In order to make participation as simple as possible, a further particular embodiment of the method according to the invention has the feature that the participation message comprises a connection identification of the telecommunication device of the player in the home network, and on the basis thereof a prize that has been won is allocated to the player. The connection identification, for instance the so-called MISDN number, is of necessity unique, and thereby provides sufficient basis for allocating a prize and payment unambiguously to a determined telecommunication device.

A further particular embodiment of the method according to the invention has the feature that the prize comprises an amount of money and is paid out to the player along the same or at least a similar manner as the payment for participation was obtained. If the payment for participation has been charged to a telecommunication account of the player, the prize can thus be credited thereto. A money transfer from an optionally virtual account of the player can therefore also be followed by a payment into the same account when a prize is won. Restrictions can otherwise be operated here in respect of the size of the prize amount up to which such a method is followed.

The method according to the invention is not otherwise limited to paying out money prizes. A further particular embodiment of the method according to the invention has the feature that the prize comprises a prize other than in money, in particular at least one free participation in a following execution of the game of chance. This relates in particular to for instance free lots for subsequent draws, optionally as desired in a lottery, although physical prizes in the form of products and cost-free services such as holidays and the like can also be awarded.

In order to provide monitoring of the participating players, without detracting from the desired low threshold for participation, a further particular embodiment of the method according to the invention has the feature that the award of the prize takes place only after the player has registered at the platform while specifying identification data of the player. Such a registration is not required for participation, so that it is already possible to take part just by sending a participation message. However, in this particular embodiment of the method, the awarding of a possibly won prize only takes place after the identity of the player has been specified, whereby this player becomes known to the game platform.

With a view to reducing, among others, gambling addiction and abuse of the game of chance, a further preferred embodiment of the method according to the invention has the feature that the game platform comprises registration means which impose restrictions on participation in the game of chance. Such a limitation can be of a general nature, for instance by setting a limit per execution or draw to the number of participating lots per player. In addition, players can be specifically excluded, for instance after abuse or fraud by this player has been established or on the basis of observed symptoms of addiction.

A particular embodiment of the system according to the invention has the feature that it is suitable for and adapted to perform one or more of the above described embodiments of the method according to the invention. To this end a system of the above stated type has the feature according to the invention that the payment system comprises an interface layer which is able and adapted to determine an identity of the telecommunication home network of the player and that the payment system is able and adapted, on the basis of the identity of the home network of the player, to opt for a payment protocol so as to irrevocably charge to the player the at least one execution of the game of chance via a network payment system of the home network of the player.

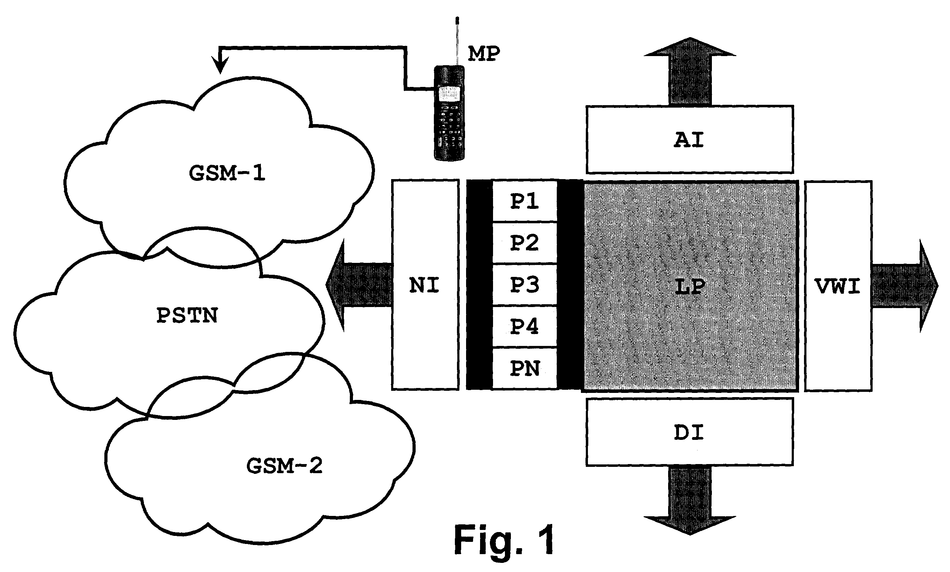

The invention will be further elucidated hereinbelow with reference to an exemplary embodiment and an associated drawing, in which
- figure 1: shows a schematic representation of an embodiment of the system according to the invention.

Figure 1 shows schematically a lottery platform LP around which is constructed an embodiment of a system and method according to the invention, which is this example provides a lottery within a telecommunication network environment. The lottery platform comprises a central computer system and is coupled to at least one telecommunication network via a network interface NI. This interface NI provides access to one or more public fixed telephone networks PSTN as well as to one or more mobile networks GSM-1, GSM-2 and the Internet. Message traffic is possible within these networks on the basis of short text messages (SMS) by means of SMS services provided for this purpose in the networks. In addition, the platform LP comprises an application interface AI, by means of which data-exchange with the platform is possible and settings therein can be modified.

A player who wishes to participate in the lottery operated by platform LP must possess a telecommunication device, in particular a mobile telephone MP, which is given access and registered in an own home network GSM-1. In addition to registration, home network GSM-1 generally provides a telecommunication network payment system with which the establishing and maintaining of telecommunication connections with the telecommunication device and the telecommunication services utilized therewith are charged to the registered holder of the telecommunication device.

In order to enable participation in one or more draws of the lottery conducted by the platform, a participation message is sent using the telecommunication device. In the present embodiment this message comprises a short text message (SMS) with a fixed, predetermined content, for instance the word "LOT", and is sent to a determined connection identification of the platform in the network made known as such to a would-be player. The message can thus be processed fully automatically by lottery platform LP.

This processing comprises in the first instance of an assessment by a payment system BS associated with lottery platform LP. When the participation message arrives, only a unique connection identification, a so-called MISDN number, of the telecommunication device MP, is known to platform LP. The platform is coupled via a database interface DI provided for this purpose to a database system in which registered data of participants, including their MISDN number, are stored. If a player, or at least his/her MISDN number, is found therein, he/she has the option of entering in advance the payment method desired by him/her. This can for instance be a transfer from a (bank) account held by him/her, in particular a virtual account with which payments can be made within the Internet, a so-called virtual wallet. In order to allow suchlike and other transactions to be carried out in a money account of a player, the platform comprises an interface VWI specifically intended for the purpose which is provided with the necessary security means. In addition, it is possible for a registered participant to indicate that participation must be discounted against lots won in an earlier draw.

If a participant is not (yet) registered or no alternative payment method is chosen by him/her, charging of the costs associated with participation then takes place via the network provider of his/her personal home network. This means that non-registered holders of a telecommunication device can also participate in the lottery, be it in this case that the participation costs will here always be charged via the provider of his/her home network. This procedure will be described below.

After a participation message has been received by platform LP from telecommunication device MP, via database interface DI at least one database coupled thereto is first consulted on the basis of the connection identification, the MISDN number, of the telecommunication device. Determined MISDN numbers can be blocked via this database, so that they are excluded from further participation, temporarily or otherwise. Restrictions may also be imposed on the maximum number of participating lots per player per draw, for instance to prevent excessive use and gambling addiction. In this case a check is also made after receipt as to whether this maximum has already been reached or not. In the case participation is not allowed, platform LP sends a return message to this effect. A lot (number) will otherwise be assigned to the player.

If the player is entitled to cost-free participation, for instance because in a previous draw he/she has won free lots, and the player has indicated a wish to make use thereof, the participation in the following draw is discounted thereagainst. That is, the number of free lots registered to the player is decreased by one. Payment for participation is hereby determined, and the platform will send a return message to the telecommunication device in which the lot number and the draw are notified. The assigned lot is stored by the platform in a register of participating lots on the basis of which the draw will be made.

If the player does not have free participation rights, the participation costs will be charged to the player via the network provider of his/her home network. For this purpose the platform has at its disposal a payment system BS with an interface layer IL which is able and adapted to determine from the participation message an identity of the home network GSM-1 of the telecommunication device MP. In order to charge the participation costs use will be made of the network payment system of this home network, which system has therefore also been determined.

A return message is also sent in this case to the telecommunication device MP in which the lot number and data relating to the draw are made known to the player, although now a payment is linked thereto in which at least the cost of participation in the draw are taken into account. These costs are thus charged to the payment system of the home network of the player on the basis of the return message, making use of the network payment system of this network which must provide for such charging. The payment system BS then waits for a confirmation from the network payment system that it was also actually possible to charge the costs to the telecommunication device MP. Because this confirmation can in practice take various forms, payment system BS of the platform has a specific protocol P1.PN for each network payment system or each group of corresponding network payment systems for the purpose of establishing payment. It is thus possible that a network payment system already charges the costs when the return message is available to the player in the home network GSM-1 of the player, without the player having had to actually download the message into his/her telecommunication device. In this case the storage of the return message on the relevant server in the home network GSM-1 of the player will be interpreted as payment. This is provided for instance in a first protocol P1.

It is also possible for charging to take place only if and after the return message has actually been downloaded into the telecommunication device of the player and stored in the memory thereof. In that case payment is only accepted once a confirmation has been received from the home network GSM-1 not only that the return message has been placed on the relevant server but also that it has been sent to telecommunication device MP of the player. This is provided for instance in protocol P2.

For each network payment system of home networks that have been given access, the payment system BS of the platform thus has at its disposal an appropriate protocol P1.Pn which is activated on the basis of the identity of the relevant home network determined from the participation message. If a payment confirmation is thus obtained from the relevant protocol, a payment confirmation will be issued to the platform via a payment interface BI of the platform and the lot in question will be added to the pool of participating lots. If on the other hand such a confirmation is not obtained, or not obtained in good time, the lot is rejected and not added to the pool of participating lots. In addition, it is possible that an unambiguous confirmation of payment cannot be received from a network payment system, for instance because of a mismatch, in which case a subscriber to this network is excluded from participation in the lottery. Payment system BS also has for this purpose an appropriate protocol which already excludes a player on the basis of the identity of his/her home network. This ensures that the lots in the pool taking part in the draw have also actually been paid for.

The actual lottery draw can take place either inside or outside the platform LP. In the latter case platform LP is fed with a list of winning lot numbers. A prize message is sent by platform LP to the telecommunication devices registered with these lot numbers, which message states the nature and size of the prize or prizes won. Payment of the prize can take place in the same manner as payment for participation was obtained. Money prizes below a determined limit are thus paid by transferring the relevant amount to the associated network payment account via the network payment system of home network GSM-1. Larger money prizes and other prizes require an additional registration of the player. Such a registration can take place by telephone, although platform LP also provides a web server via application interface AI, so that players can also register themselves on-line via the Internet. The thus obtained data are stored in a database coupled to the database interface DI. Larger money prizes will then be credited to an optionally virtual money account of the player, the data of which account have thus been obtained via registration. By means of the money account interface VWI the platform LP is able to carry out secure transactions on such an account. Prizes other than in money, in particular free products or services, are delivered to the player or made available for collection on the basis of the thus registered personal and address data.

Via the web server thus registered players can, if desired, also select an alternative method of payment, so that participation in subsequent draws are debited automatically or otherwise, i.e. on subscription basis, to for instance a virtual wallet or other money account.

The invention thus provides a method and system for conducting a lottery with a lottery platform which can be continuously available and can make draws fully automatically, i.e. without human intervention being necessary, wherein payment for the participating lots is guaranteed.

Although the invention has been elucidated above on the basis of only a single exemplary embodiment, it will be apparent that the invention is by no means limited thereto. On the contrary, many variations and embodiments are still possible within the scope of the invention for the person with ordinary skill in the art.

## Claims

1. Method for conducting a game of chance, using at least one telecommunication network, wherein a telecommunication device of a player is given access to a telecommunication home network, wherein the player sends a participation message to an electronic game platform using the telecommunication device in order to sign up for at least one execution of the game of chance and wherein participation in the at least one execution is charged to the player by means of a payment system, **characterized in that** an identity of the telecommunication home network of the player is determined from the participation message, that on the basis of the identity of the home network of the player a payment protocol is followed to obtain payment for the at least one execution via a network payment system of the home network of the player, and that participation in the at least one execution is only allowed after irrevocable payment therefor has been established.

2. Method as claimed in claim 1, **characterized in that** the game of chance comprises a lottery.

3. Method as claimed in claim 1, **characterized in that** the participation message is a text message, and that the text message is sent making use of a text message service (SMS) of the telecommunication network.

4. Method as claimed in one or more of the foregoing claims, **characterized in that** the payment system comprises a telecommunication network payment system which is associated with the home network of the player and which charges the player for a use of the telecommunication device in a telecommunication network.

5. Method as claimed in claim 4, **characterized in that** the telecommunication network payment system comprises a payment system from a group comprising a current account of the provider of the home network and a prior money deposit to which the payment can be debited.

6. Method as claimed in claim 4 or 5, **characterized in that** in response to the participation message, the payment system sends at least one participation confirmation message to which a participation payment is linked which is charged in the home network to the telecommunication device of the player.

7. Method as claimed in claim 6, **characterized in that** the payment system generates at least two messages to the telecommunication device, wherein to a first of the two messages is linked the participation payment and to a second of the two messages is linked a payment for use of the at least one telecommunication network, both of which payments are charged in the home network to the telecommunication device of the player.

8. Method as claimed in one or more of the foregoing claims, **characterized in that** the participation message comprises a connection identification of the telecommunication device of the player in the home network, and on the basis thereof a prize that has been won is allocated to the player.

9. Method as claimed in claim 8, **characterized in that** the prize comprises an amount of money and is paid out to the player along the same, or at least a similar manner as the payment for participation was obtained.

10. Method as claimed in claim 8, **characterized in that** the prize comprises a prize other than in money, in particular at least one free participation in a following execution of the game of chance.

11. Method as claimed in claim 8, 9 or 10, **characterized in that** the award of the prize takes place only after the player has registered at the platform specifying identification data of the player.

12. Method as claimed in any of the foregoing claims, **characterized in that** the game platform comprises registration means which impose restrictions on participation in the game of chance.

13. System for conducting a game of chance, in particular a lottery, comprising at least one telecommunication network, a telecommunication device of a player which has been given access to a telecommunication home network, a game of chance platform which is able and adapted to receive a sign-up for at least one execution of the game of chance from the telecommunication device and to make a prize award on the basis of the at least one execution, and comprising a payment system for charging the player for participation in the at least one execution, **characterized in that** the payment system comprises an interface layer which is able and adapted to determine an identity of the telecommunication home network of the player and that the payment system is able and adapted, on the basis of the identity of the home network of the player, to opt for a payment protocol so as to irrevocably charge to the player the at least one execution of the game of chance via a network payment system of the home network of the player.
